# EUROPÄISCHE PATENTANMELDUNG

(11) **EP 2 060 996 A1**
(43) Veröffentlichungstag der Anmeldung: **20.05.2009**
(21) Anmeldenummer: 09000343.5
(22) Anmeldetag: 09.02.2005
(51) Int. Cl.: G06Q 10/00

(54) **Transaktionssystem und Verfahren zur Durchführung von Transaktionen**

(62) Teilanmeldung aus: 05002648.3
(71) Anmelder: Deutsche Post AG, 53113 Bonn (DE)
(72) Erfinder: Kranz, Jürgen, 50374 Erfstadt (DE); Westerweller, Jörg, 51570 Windeck /Rosbach (DE)
(74) Vertreter: Jostarndt, Hans-Dieter

(57) **Zusammenfassung**

Die Erfindung betrifft ein Transaktionssystem zum Verarbeiten von Transaktionsinformationen von wenigstens einem Leistungserbringer, mit einem Mittel zum Erfassen von Abrechnungsdaten.

Erfindungsgemäß zeichnet sich das Transaktionssystem dadurch aus, dass das Transaktionssystem wenigstens ein Vorgangsbearbeitungsmodul (VGA) enthält, wobei das Vorgangsbearbeitungsmodul (VGA) mit einem Context-Manager verbunden ist, wobei der Context-Manager so ausgebildet ist, dass er mit mindestens einem Vorgangsbearbeitungsmodul (VGA) und mit mehreren Dienstkomponenten verbunden ist.

## Beschreibung

Die Erfindung betrifft ein Transaktionssystem zum Verarbeiten von Transaktionsinformationen.

Die Erfindung betrifft ferner ein Verfahren zur Durchführung von Transaktionen.

Aus der amerikanischen Offenlegungsschrift US 2003/0088713 A1 ist ein Datenverarbeitungssystem mit einer Modularstruktur bekannt.

Es ist wünschenswert, ein Transaktionssystem bereitzustellen, das eine besonders hohe Flexibilität aufweist und so schnell an unterschiedliche Anforderungen angepasst werden kann.

Erfindungsgemäß wird ein Transaktionssystem nach Anspruch 1 und ein Verfahren nach Anspruch 10 bereitgestellt.

Insbesondere sieht die Erfindung vor, ein Transaktionssystem zum Verarbeiten von Transaktionsinformationen so auszugestalten, dass das Transaktionssystem Vorgangsbearbeitungsmodule enthält, wobei die Vorgangsbearbeitungsmodule mit einem Context-Manager verbindbar sind, wobei der Context-Manager so ausgebildet ist, dass er mit mindestens einem Vorgangsbearbeitungsmodul und mit mehreren Dienstkomponenten verbunden ist.

Die Erfindung beinhaltet ferner ein Verfahren zur Durchführung von Transaktionen.

Die Erfindung eignet sich für einen Einsatz bei beliebigen Transaktionen. Erfindungsgemäße Transaktionen umfassen sowohl konventionelle Transaktionen, bei denen eine Abfolge von Operationen nur komplett oder gar nicht durchgeführt wird, als auch neuartige Transaktionstypen, bei denen nur eine Bereitstellung von Informationen und/oder nur eine Durchführung von Funktionen erfolgt. Es ist ein Vorteil des erfindungsgemäßen Transaktionssystems, dass es sich sowohl bei konventionellen Transaktionen als auch bei nichtkonventionellen Transaktionen einsetzen lässt.

Ein Einsatz der Erfindung bei konventionellen Transaktionen ist vorteilhaft, wenn eine Vollständigkeit von Transaktionen sichergestellt werden muss. In diesem Fall werden transaktionale Änderungen an Datenbeständen erst dauerhaft gespeichert, wenn die Transaktion vollständig durchlaufen ist.

Es ist besonders vorteilhaft, eine Datenspeicherung innerhalb der Vorgangsbearbeitungsmodule vorzusehen. Hierdurch wird sichergestellt, dass die Vorgangsbearbeitungsprozessoren jeweils unmittelbar auf die für die Vorgangsbearbeitung erforderlichen Daten zugreifen können.

Ferner lässt sich das erfindungsgemäße Transaktionssystem jedoch auch für die erfindungsgemäß mit umfassten nichtkonventionellen Transaktionen einsetzen, bei denen keine gemeinsame Folge von Verarbeitungsschritten erforderlich ist. Ein Beispiel hierfür ist eine Kontostandsabfrage, bei der keine Veränderung des Datenbestandes erfolgt. Insbesondere umfassen die erfindungsgemäßen Transaktionen sowohl sämtliche Arten der Darstellung von Informationen/der Durchführung von Funktionen sowie datenverändernde und nicht datenverändernde Vorgänge. Ferner sind sowohl statuslose als auch statusbehaftete Transaktionen umfasst.

Durch die Erfindung werden mehrere vorteilhafte technische Wirkungen erzielt.

Die technischen Wirkungen können sowohl durch einzelne Mittel erzielt werden als auch durch die Kombination mehrerer Mittel, was besonders vorteilhaft ist.

Beispielsweise kann ein erfindungsgemäß ausgestaltetes Transaktionssystem schnell und mit geringem Aufwand an neue Vorgänge angepasst werden.

Durch eine Zuordnung einzelner Vorgänge zu einzelnen Vorgangsbearbeitungsmodulen wird die Flexibilität weiter erhöht.

Ferner wird eine gegenseitige Beeinflussung der Bearbeitung verschiedener Vorgänge vermieden.

Insbesondere durch indirekte Datenübertragung über definierte, gesteuerte Datenübertragungskanäle wird die gegenseitige Beeinflussung weiter verringert.

Ferner ist es vorteilhaft, dass die einzelnen Module jeweils für die Ausführung spezifischer Vorgangsarten ausgerüstet sind.

Es ist besonders vorteilhaft, die Vorgangsbearbeitungsmodule so auszugestalten, dass sie voneinander unabhängig unterschiedliche Funktionen wahrnehmen können.

Vorzugsweise ist das erfindungsgemäße System so aufgebaut, dass die Module beliebig ausgetauscht, entfernt oder hinzugefügt werden können.

Die Vorgangsbearbeitungsmodule können durch Plug & Play-Installation einfach angeschlossen werden, ohne dass andere Bestandteile des Systems geändert werden müssen. Die Vorgangsbearbeitungsmodule greifen auf unterschiedliche weitere Module des Systems zu.

Durch die Modularstruktur wird eine einfache Integration von neuen Vorgangsarten in das Datenverarbeitungssystem ermöglicht.

Die Erfindung beinhaltet ferner ein Verfahren zur Durchführung von Transaktionen.

Vorteilhafte Weiterbildungen des Transaktionssystems sind in der nachfolgenden Beschreibung offenbart und Gegenstand der Patentansprüche 2 bis 9.

Bevorzugte Ausführungsformen des Verfahrens sind gleichfalls nachfolgend offenbart.

Eine besonders bevorzugte Ausführungsform der Erfindung zeichnet sich dadurch aus, dass der Context-Manager sowohl als zentrales Steuerungsmittel für die Vorgangsbearbeitungsmodule als auch als zentraler Dienstanbieter für die Vorgangsbearbeitungsmodule ausgebildet ist.

Zweckmäßigerweise wird das Transaktionssystem so ausgestaltet, dass der Context-Manager mit einer Schnittstelle ISupportService verbunden ist, wobei die Schnittstelle so ausgebildet ist, dass sie eine Abfrage des Vorhandenseins von angebundenen Dienstkomponenten ermöglicht.

Ferner ist es vorteilhaft, dass das Transaktionssystem eine Benachrichtigungskomponente aufweist, wobei die Benachrichtigungskomponente ein Übermitteln von Daten ermöglicht.

Eine besonders zweckmäßige Ausführungsform der Erfindung zeichnet sich dadurch aus, dass die Benachrichtigungskomponente ein Auswahlmodul zur Auswahl von Übertragungswegen zum Übermitteln der Benachrichtigungen enthält.

Hierdurch ist es möglich, unterschiedlichen Typen von Benachrichtigungen unterschiedliche Übertragungswege zuzuordnen und so Übertragungskapazitäten besonders wirksam zu nutzen.

Eine besonders bevorzugte Ausführungsform der Erfindung zeichnet sich dadurch aus, dass sie einen Session-Manager enthält, wobei der Session-Manager ein Modul zur Verwaltung zusammenhängender Rohdatensätze enthält.

Eine besonders vorteilhafte Ausführungsform dieser Variante der Erfindung zeichnet sich dadurch aus, dass der Session-Manager mit einer Rohdatenkomponente verbunden ist.

Ferner ist es zweckmäßig, dass der Context-Manager Schnittstellen bereithält, die eine Datenübertragung zwischen dem Session-Manager und der Rohdatenkomponente ermöglichen können.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

### Von den Figuren zeigt

- Fig. 1: eine Prinzipdarstellung eines erfindungsgemäßen Transaktionssystems;
- Fig. 2: eine Prinzipdarstellung von besonders bevorzugten Bestandteilen des erfindungsgemäßen Transaktionssystems;
- Fig. 3: einen Ausschnitt aus Fig. 1 mit Darstellung mehrerer Vorgangsbearbeitungsmodule sowie eines Application-Managers;
- Fig. 4: eine Prinzipdarstellung der Einräumung von Berechtigungen durch einen Berechtigungs-Plugin und
- Fig. 5: eine Detailansicht einer erfindungsgemäßen Datenkomponente.

Das erfindungsgemäße Transaktionssystem weist mehrere Komponenten auf, die so miteinander verbunden sind, dass eine besonders wirksame Durchführung von Bearbeitungsvorgängen ermöglicht wird.

Obwohl ein Zusammenwirken mehrerer der erfindungsgemäßen Komponenten besonders zweckmäßig ist, weisen bereits die einzelnen Komponenten vorteilhafte Wirkungen auf.

In den Abbildungen wird der Einsatz der Erfindung bei der Erzeugung, Verwaltung und Übermittlung von Daten eines aufwendigen Datenbanksystems dargestellt. Das Datenverarbeitungssystem enthält mehrere Vorgangsbearbeitungsmodule, die jeweils - vorzugsweise unabhängig voneinander - Daten erhalten und/oder übermitteln.

Es ist besonders vorteilhaft, die Erfindung bei einem komplexen System einzusetzen, da hier die Anzahl von zu bearbeitenden Daten mit unterschiedlichen Eigenschaften besonders hoch ist und so die positiven Effekte der Erfindung besonders gut wirken.

Es ist jedoch gleichfalls möglich, die Erfindung bei einem weniger aufwendigen System einzusetzen und auch dort die Vorteile einer wirksameren Nutzung von Netzwerkressourcen zu erzielen.

Die Erfindung eignet sich insbesondere für einen Einsatz in einem Netzwerk, welches einen oder mehrere Server beinhaltet. Ein Client initialisiert bei seinem Start einen Anwendungsrahmen. Der Client kann dabei eine Plattform mit weiteren Komponenten eines Frameworks wie Datenbanken, Abrechnungsmodule etc. nutzen. In einem besonders bevorzugten Ausführungsbeispiel der Erfindung kann eine als Carbon (Component ARchitecture for Business OptimizatioN)-Plattform bezeichnete Plattform genutzt werden, welche sowohl durch geeignete Hardware-Komponenten (zum Beispiel auf Grundlage programmierbarer elektronischer Bauelemente) als auch unter Einsatz von Software realisiert und auf Datenverarbeitungsanlagen installiert sein kann. Das Framework beinhaltet dabei die Laufzeitbibliothek der Plattform, welche auch als Common Language Runtime bezeichnet wird (CLR). Nach der Initialisierung des Anwendungsrahmens durch den Client initialisiert und startet dieser zweckmäßigerweise den Kern des Frameworks.

Vor der Initialisierung des Kerns können Prüfungen durchgeführt werden, welche beispielsweise die Integrität des Programms betreffen. Ferner kann überprüft werden, ob es sich um einen Start oder einen Recovery-Fall handelt, welcher durch einen Abbruch eines Vorganges erzeugt wurde.

Das Vorgangsbearbeitungsmodul befindet sich vorzugsweise zusammen mit einer Datenkomponente auf dem Client. Dabei können zwischen die Datenkomponente und das Vorgangsbearbeitungsmodul weitere Komponenten oder Funktionseinheiten insbesondere des verwendeten Frameworks geschaltet sein, so dass es sich auch um eine indirekte Verbindung handeln kann. Die Datenkomponente ist vorzugsweise im Frontend des Computersystems angeordnet, sie kann jedoch je nach Ausbildung des Systems auch dem Backend zugeordnet werden. Das Vorgangsbearbeitungsmodul bildet elektronisch einen Vorgang oder Geschäftsprozess ab, welcher von dem Vorgangsbearbeitungsmodul abgewickelt wird. Bei den Vorgängen handelt es sich beispielsweise um Transaktionen innerhalb eines Retailsystems, welche im Bereich des Finanz-, Versicherungs-, und Logistikwesens eingesetzt werden. Ferner können auf dem Client mehrere verschiedene Versionen eines Vorgangsbearbeitungsmoduls installiert sein. Beim Starten des Vorgangsbearbeitungsmoduls wird automatisch die Version mit der höchsten Versionsnummer herangezogen. Um dies zu ermöglichen, sind die Vorgangsbearbeitungsmodule zweckmäßigerweise in einer bestimmten Weise in einem Vorgangsbearbeitungsmodul-Verzeichnis abgelegt worden.

In einem bevorzugten Ausführungsbeispiel der Erfindung ist das Vorgangsbearbeitungsmodul ebenfalls an ein Framework angeschlossen, das vorzugsweise objektorientiert und komponentenorientiert ausgebildet ist. Bei dem Framework handelt es sich um ein Application Programming Interface API, welches die Funktionalitäten bereitstellt, Clients für verschiedene Assistent-basierte Vorgangsarten zu erstellen. Die von dem Framework zur Verfügung gestellten Funktionalitäten umfassen beispielsweise Kernfunktionalitäten wie das Starten/Beenden des Clients oder der Vorgangsbearbeitungsmodule. Das Framework stellt beispielsweise ein gemeinsames Startmodul zum Starten der Vorgangsbearbeitungsmodule bereit. Ferner unterstützt das Framework die Vorgangsbearbeitungsmodule bei Datenhaltung und Ablaufsteuerung und stellt Komponenten für den Zugriff auf Daten oder zum Drucken bereit. Darüber hinaus werden Basisfunktionalitäten wie die Protokollierung oder die Fehlerbehandlung bereitgestellt.

Als vollständig objektorientierte Programmiersprache innerhalb des Frameworks kann beispielsweise C# verwendet werden. Die objektorientierte Programmierung sieht Objekt-Klasse-Beziehungen vor, wobei eine Klasse ein abstrakter Oberbegriff für Objekte ist, die eine gemeinsame Struktur und/oder ein gemeinsames Verhalten aufweisen. Ein Objekt ist dabei ein zur Laufzeit eines Programms vorhandenes Exemplar einer Klasse, für das Speicherplatz zur Verfügung gestellt wird. Ein Objekt ist eine Instanz einer Klasse. Eine Klasse und damit ihre Objekte werden durch Attribute, Operationen, Zusicherungen und Beziehungen charakterisiert, wobei die Klassen die Attribute und Methoden zu einer Einheit zusammenfassen. Die Attribute sind standardmäßig nur über Methoden der Klasse zugänglich, so dass eine Kapselung oder Zugriffsbeschränkung vorliegt. Eine Klasse kann ferner keine, eine oder mehrere explizite Schnittstellen besitzen und die Kapselung trennt die Implementierung von der Schnittstelle.

In einem besonders bevorzugten Ausführungsbeispiel der Erfindung ist das Vorgangsbearbeitungsmodul kein eigenständiges Programm, sondern benötigt zu seiner Ausführung die Infrastruktur eines Clients. Es handelt sich jedoch um eine aktive Komponente, welche beispielsweise das eigene Pausieren und/oder den Start anderer Vorgangsbearbeitungsmodule bewirken kann. Ein Pausieren erfolgt bei einem Arbeitsplatzstack vorzugsweise durch Auflegen eines zusätzlichen Layers.

Ferner können einzelne Vorgangsbearbeitungsmodule im Frontend auf dem Client angeordnet sein, während sich andere Bereiche im Backend, das heißt auf einer zentralen ServerApplication oder in einem Umsystem befinden können. Umsysteme sind die Bezeichnung für Systeme außerhalb des Filialsystems.

Auf dem Computermittel sind vorzugsweise mehrere Vorgangsbearbeitungsmodule installiert, welche jeweils einen Vorgang abbilden. Die Vorgangsbearbeitungsmodule können sich dabei im Frontend oder im Backend des Computersystems befinden. Vorzugsweise sind die VGA wie die Datenkomponente im Frontend angeordnet. Ferner ist es zweckmäßig, dass das Computersystem aus mehreren Komponenten besteht.

Nachfolgend werden besonders bevorzugte Bestandteile der Erfindung dargestellt:

### Adapterkomponente:

Die Adapterkomponente stellt als Schnittstelle eine Verbindung zwischen der Zugriffskomponente und den verschiedenen Datensystemen her. Die Adapterkomponente kapselt die Zugriffe auf die nativen Schnittstellen der unterstützten Datensysteme und ermöglicht insbesondere die Anbindung von Online- und Offline-Datensystemen. Die Adapterkomponente setzt dabei vorzugsweise direkt auf die Datensysteme oder eine verwendete Middleware auf.

Beispielsweise können entsprechende Adapter für den Zugriff auf verschiedene Datenbanken vorgesehen sein. Durch ein verwendetes Framework können als Adapter für den lokalen Datenbankzugriff bekannte Adapter, beispielsweise OLEDB (Open DataBase Connectivity)-, SQL (Standard Query Language)- und EDBC (Enhanced DataBase COntainer)-Adapter, zur Verfügung stehen. Vorzugsweise wird für jeden Adapter eine entsprechende Datenaktion bereitgestellt.

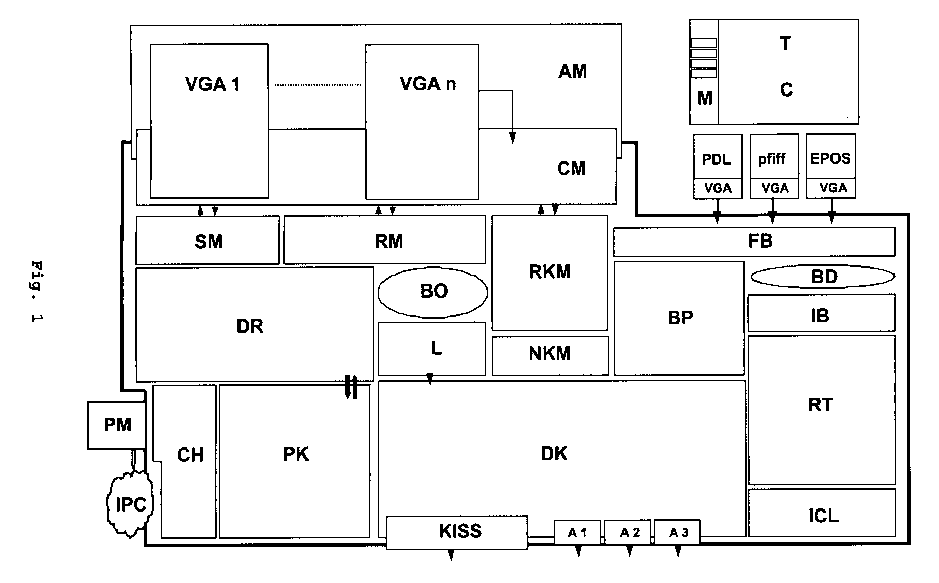

Die Adapterkomponente umfasst ferner entsprechende Adapter für den Online- und Offline-Zugriff auf Datensysteme. Ist beispielsweise ein Datensystem online ansprechbar, wird ein entsprechender Adapter bereitgestellt. Ist das Datensystem dagegen offline angebunden, ist ein Adapter für den Offline-Zugriff erforderlich. Für die Datenverbindung kann beispielsweise eine Middleware verwendet werden, so dass der Adapter direkt auf diese Middleware aufsetzt. Ist ein Datensystem des Backends, wie in Fig. 1 dargestellt, über eine Benachrichtigungskomponente KISS mit dem Frontend verknüpft, wird für den Zugriff auf dieses Datensystem ebenfalls ein eigener Adapter in der Adapterkomponente bereitgestellt. Dabei kann ebenfalls eine Middleware verwendet werden.

### Application Manager AM

Der Application Manager erstellt und initialisiert im Verlauf des Systemstarts alle Objekte, die für den Betrieb von Carbon notwendig sind. Außerdem stellt er den grafischen Anwendungsrahmen in Form eines Hauptfensters mit den jeweiligen Kontrollmechanismen zur Verfügung.

### Berechtigungsmodul BM

Vorzugsweise ist das Berechtigungsmodul als Berechtigungs-Plugin ausgebildet.

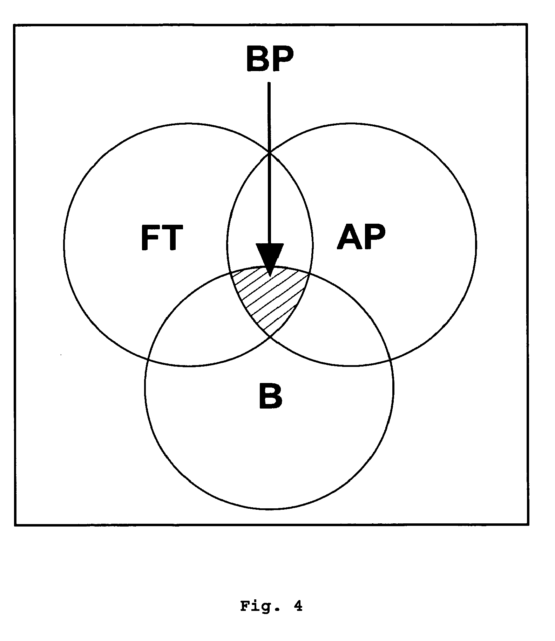

Einzelheiten zur prinzipiellen Funktion des Berechtigungs-Plugins BP sind in Fig. 4 dargestellt. Aus dieser Darstellung ergibt sich, dass die Berechtigungen so gesteuert sind, dass Handlungen nur dann vorgenommen werden dürfen, wenn sowohl der Benutzer B als auch ein Filialtyp, in dem eine Benutzungseinheit steht, als auch der jeweilige Arbeitsplatz AP die Bearbeitung eines Vorgangs erlauben.

Dies bedeutet beispielsweise, dass auch ein Benutzer B mit sehr weitreichenden Berechtigungen nur an einem entsprechend ausgestatteten Arbeitplatz AP in einer Filiale eines entsprechenden Filialtyps FT Handlungen einer entsprechend hohen Berechtigungsstufe vornehmen kann.

### Bibliothek (Library)

Bibliotheken beinhalten die Grundfunktionalitäten des Carbon-Frameworks. Hierbei handelt es sich z. B. um Funktionalitäten wie Logging, ErrorHandling, Zugriff auf Systeminformationen etc.

Die Funktionalitäten in einer Bibliothek benötigen nicht die Infrastruktur eines Clients. Insbesondere kann jedes entsprechend konfigurierte Programm auf die Funktionalitäten einer Bibliothek zugreifen. Bibliotheken stehen zwar vorzugsweise nicht im direkten Dialog mit dem Anwender, können jedoch durchaus Elemente enthalten, die der Benutzeroberfläche zugeordnet werden. Dies sind dann Hilfsfunktionalitäten (Anzeige von Meldungen), die durch das Carbon-Framework, den Client oder durch Vorgangsarten genutzt werden.

### Carbon

Carbon bezeichnet eine Plattform, die vorzugsweise folgende Bestandteile enthält:
- Client
- Vorgangsart
- Komponente
- Bibliothek (Library)

### Carbon-Client

Der Carbon-Client startet einzelne Funktionen/Applicationen. Mehrere Carbon-Clients können nebeneinander existieren.

Als Client kann grundsätzlich jedes Programm bezeichnet werden, welches das gesamte Carbon-Framework oder auch nur Teile davon nutzt. In erster Linie sind dies Programme, deren Zweck es ist, Vorgangsarten auszuführen. Allerdings können auch andere Programme, wie der Carbon-Host, der Dienste für andere Carbon-Clients zur Verfügung stellt, als Client bezeichnet werden.

Carbon-Framework CF

Das Carbon-Framework bündelt vorzugsweise mehrere Module.
Das Carbon-Framework) ist zweckmäßigerweise ein API (Application Programming Interface), welches die Funktionalitäten bereitstellt, Clients für Assistent-basierte Vorgangsarten zu erstellen.

Die im Rahmen des Carbon-Frameworks zur Verfügung gestellten Funktionalitäten, gruppieren sich vorzugsweise in vier Aufgabengebiete:
- Kernfunktionalitäten - Starten/Beenden des Clients, Starten/Stoppen bzw. Verwalten von Vorgangsarten,
- Vorgangsartenunterstützung (Masken, Datenhaltung, Ablaufsteuerung, etc.),
- Komponenten (Zugriff auf Daten, Drucken etc.),
- Bereitstellung von Basis-Funktionalitäten (Logging, ErrorHandling etc.).

Der Versand von Rohdaten ist eine zweckmäßige Verwendung des Carbon-Frameworks. Sämtliche Daten, die am Frontend erfasst werden, verschickt vorzugsweise das Carbon-Framework in Form von Rohdatensätzen an das Backend.

Ferner können als Datenverarbeitungsanlage Computer zur Steuerung von Verkaufautomaten, wie beispielsweise Briefmarkenautomaten, genutzt werden, wobei die Verkaufsautomaten vorzugsweise ebenfalls über Anzeige- und Eingabemittel verfügen, die mit dem Computer verbunden sind, welcher eine Speicher- und eine Prozessoreinheit aufweist.

Anhand der Carbon-Plattform können Transaktionen zudem über ein Netzwerk, wie beispielsweise ein lokales Netzwerk oder das Internet, abgewickelt werden. Die Plattform ist dabei auf einem Server-Computer installiert, der in einer dem Fachmann bekannten Weise über einen Client-Computer bedient wird, der in dem Netzwerk mit dem Server-Computer verbunden ist.

Zur Durchführung bzw. Bearbeitung von Prozessen enthält die Carbon-Plattform insbesondere Datenkomponenten, welche den Zugriff auf verschiedene Datenquellen und -senken steuern und zur Durchführung der Vorgänge benötigte Daten, wie beispielsweise Kundendaten bereitstellen, einen so genannten Carbon-Host (CH), welcher Basisdienste, wie beispielsweise Druckdienste oder einen Zugriff auf Eingabegeräte wie Handscanner oder Chipkartenleser, bereitstellt, sowie Komponenten, welche die bei der Bearbeitung eines Vorgangs erfassten und verarbeiteten Daten nachgeschalteten Systemen, wie beispielsweise Buchhaltungssystemen oder Systemen zur Datenhaltung, übergeben.

Prozesse werden innerhalb der Carbon-Plattform durch Vorgänge abgebildet, denen jeweils ein Vorgangsbearbeitungsmodul zur Durchführung der Vorgänge zugeordnet ist. Der modulare Aufbau ermöglicht es dabei, Prozesse in Teilprozesse zu gliedern, die Bestandteil einer Vielzahl von Prozessen sind. Durch dieses dem Fachmann bekannte Prinzip müssen Teilprozesse nur einmal als Vorgang implementiert werden und können bei der Bearbeitung eines Gesamtprozesses aufgerufen werden, ohne dass eine Implementierung in jedem Gesamtvorgang erforderlich ist.

Bei der Bearbeitung eines Prozesses werden somit in der Regel gleichzeitig mehrere einen Teilprozess abbildende Vorgänge durchgeführt, die jeweils mittels eines Vorgangsbearbeitungsmoduls abgearbeitet werden. Zur Verwaltung der verschiedenen Vorgangsbearbeitungsmodule verfügt die Carbon-Plattform über einen Context-Manager, der insbesondere auch zum Initialisieren der Vorgangsbearbeitungsmodule verwendet wird.

Eine besonders bevorzugte Ausführungsform des Carbon-Frameworks CF ist in Fig. 1 dargestellt.

Die Darstellung verdeutlicht eine besonders bevorzugte Dreiteilung des Carbon-Frameworks.

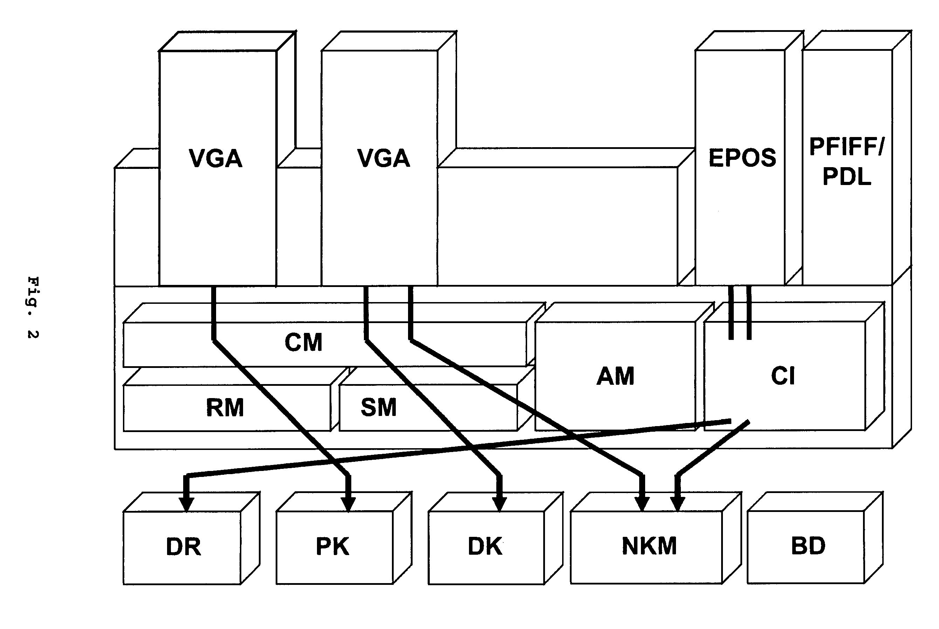

Die gewählte Darstellung zeigt, dass die - vorzugsweise parallel arbeitenden - Vorgangsbearbeitungsmodule VGA über Bestandteile des Carbon-Kerns (mittlere Ebene von Fig. 2) auf die in der untersten Ebene befindlichen Komponenten des Carbon-Frameworks zugreifen.

Bevorzugte Bestandteile der obersten Hierarchieebene des Carbon-Frameworks sind die vorzugsweise parallel betriebenen Vorgangsbearbeitungsmodule VGA sowie weitere Programmmodule, die vorzugsweise gleichfalls unabhängig voneinander betrieben werden können. Es kann sich jedoch gleichermaßen um Schnittstellen zu derartigen Programmen oder Programmmodulen handeln. Diese Programmmodule betreffen beispielsweise ein weiteres Transaktionssystem (EPOS) oder Programmbestandteile zum Erstellen vorgebbarer Routinen Pfiff und PDL.

Der in der mittleren Ebene angeordnete Context-Manager CM ist vorzugsweise als eine Schnittstelle ausgearbeitet, die einen Zugriff der Vorgangsbearbeitungsmodule auf einzelne Komponenten ermöglicht. In einer besonders bevorzugten Ausführungsform der Erfindung, ist der Context-Manager eine Schnittstelle, die so ausgestaltet ist, dass sie weitere Schnittstellen beinhaltet.

Der Datenzugriff auf die Peripherie der in der untersten Systemebene angeordneten Komponenten kann unmittelbar über den Context-Manager oder über eine zusätzliche Einbeziehung von weiteren Systembestandteilen erfolgen.

Eine Einbeziehung eines Recovery-Managers RM hat den Vorteil, dass eine Datenspeicherung ermöglicht wird und somit Verarbeitungsvorgänge schnell wiederhergestellt werden können.

Der Einsatz eines Session-Managers SM hat den Vorteil, dass hierdurch eine Einbeziehung weiterer Daten ermöglicht wird. In einer besonders bevorzugten Ausführungsform des Session-Managers erfolgt dies dadurch, dass er ein Modul zur Verwaltung zusammenhängender Rohdatensätze enthält.

Ferner ist es zweckmäßig, dass der Kern einen Application-Manager AM sowie ein Schnittstellenmodul CI enthält.

In der Komponentenebene befinden sich vorzugsweise mehrere Komponenten, beispielsweise eine Druckkomponente DR, eine Peripheriekomponente PK, eine Datenzugriffskomponente DK, ein Kassenmodul NKM sowie ein Basisdienst BD.

Die dargestellte Ausführungsform weist zusätzlich den besonderen Vorteil auf, dass sie eine Integration bestehender Komponenten ermöglicht.

So ist es beispielsweise möglich, dass die zuvor dargestellten Programme der obersten Hierachieebene (EPOS; Pfiff/PDL und/oder einzelne Komponenten, beispielsweise das Kassenmodul NKM aus anderen Applicationen übernommen wurden.

Somit ermöglicht es das erfindungsgemäß eingesetzte Framework, bestehende Programmmodule zu integrieren und eine schnelle Implementierung erfindungsgemäßer Bestandteile auch innerhalb bestehender Systeme zu ermöglichen.

### Carbon-Host CH

Der Carbon-Host ist ein Host-Modul, das andere Module/Services aktivieren, deaktivieren oder pausieren kann.

### Carbon-Kern

Der Bereich, in dem die Carbon-Kernfunktionalitäten umgesetzt werden, wird als Carbon-Kern bezeichnet.

Der Carbon-Kern besteht vorzugsweise aus mehreren Komponenten. Beispiele für diese Komponenten sind:
Epos.Application, Carbon.Context, Carbon.Recovery und Carbon.Session.

Es ist besonders vorteilhaft, dass diese Komponenten zur Durchführung folgender Funktionen ausgestattet sind:
Epos.Application - Start der Anwendung, Initialisierung und Verwaltung des Anwendungsrahmens
Carbon.Context - Starten/Stoppen/Verwalten von Vorgangsarten, Hosten von Services, Steuerung Backup/Recovery.
Carbon.Recovery - Speichern und Verwalten der Daten für das Backup/Recovery
Carbon.Session - Verwalten von Sessions

Der Kern stellt somit die Grundfunktionalität des Carbon-Frameworks und des Clients dar. Da das Framework vorzugsweise aus einer Anzahl von passiven Assemblies besteht, gibt es einen zentralen Einstiegspunkt, der das Framework lädt und instanziiert.

Diese Aufgabe übernimmt zweckmäßigerweise ein Client.

Die EPOS.exe definiert den Eintrittspunkt in den EPOS-Client (Klasse EPOS.EntryPoint). Es wird der Application-Manager instanziiert, der Start des Frameworks eingeleitet und im weiteren Ablauf die Start-Vorgangsart geladen.

### Aufbau des Carbon-Kerns

Fig. 2 zeigt den Grundaufbau des EPOS-Clients. Die mittlere Schicht spiegelt den Kern des Frameworks wider.

### Carbon-Vorgangsart

Eine Vorgangsart stellt die systemtechnische Abbildung eines Verarbeitungsprozesses dar. Im Carbon-Framework werden an der Spezifikation und Erstellung von Vorgangsarten zweckmäßigerweise Rahmenbedingungen und Konventionen geknüpft.

Besonders bevorzugte Ausführungsformen der Vorgangsarten zeichnen sich durch das Vorhandensein eines oder mehrerer der nachfolgenden Merkmale aus:
- die Verwendung zur Verfügung gestellter Carbon-Komponenten (z. B. Vorgangsart-Steuerung);
- das Vorliegen auf einem Client in mehreren Versionen einer Vorgangsart;
- das vorzugsweise Ansprechen des Carbon-Frameworks immer mit der Version der höchsten Nummer;
- die strikte Trennung der Benutzeroberfläche in einer Vorgangsart von der Businesslogik, wobei im Carbon-Framework das MVC-Modell verwendet wird.

Beim MVC-Modell handelt es sich insbesondere um ein Entwurfsmuster zur Trennung von Programmeigenschaften. Das Entwurfsmuster dient zur Trennung des Programms in mehrere Einheiten, insbesondere in die drei Einheiten Datenmodell, Präsentation und Programmsteuerung. Als eindeutige Bezeichnung der Einheiten werden Model, View und Controller verwendet.

Durch den Einsatz des MVC-Modells ist ein flexibles Programmdesign erzielbar. Dies ermöglicht einfache Änderungen oder Erweiterungen. Ferner wird eine Wiederverwendbarkeit einzelner Komponenten ermöglicht.

Eine Vorgangsart besteht in der Regel aus mehreren Masken. Die Navigation zwischen den Masken kann sowohl linear als auch nicht-linear sein.

Zur Gestaltung der Benutzeroberfläche stehen dem Vorgangsart-Programmierer GUI-Controls aus dem Carbon-Framework zur Verfügung. GUI-Controls bezeichnen Steuerelemente der Benutzeroberfläche.

Eine Vorgangsart kann aus einer anderen VGA heraus aufgerufen werden. Zwischen Vorgangsarten kann ein Datenaustausch in beide Richtungen stattfinden.

Eine Vorgangsart sollte serialisierbar sein, damit das Backup/Recovery-System des Carbon-Frameworks diese sichern kann.

Eine VGA kann Basisdienste nutzen.

Es ist besonders zweckmäßig, das Verfahren so durchzuführen, dass ein Ablaufplan des Vorgangsbearbeitungsmoduls in einer Konfigurationsdatei hinterlegt wird, welche beim Start eines Vorgangsbearbeitungsmoduls eingelesen wird.

Durch die unmittelbare Zuordnung von Daten zu den Vorgangsbearbeitungsmodulen ist es ferner möglich, dass neue Module hinzugefügt werden können, beziehungsweise dass einzelne Vorgangsbearbeitungsmodule entfernt werden können, ohne dass die Funktionsfähigkeit anderer Vorgangsbearbeitungsmodule beeinträchtigt wird.

In einer besonders bevorzugten Ausführungsform der Erfindung sind die Vorgangsbearbeitungsmodule mit wenigstens einem weiteren Datenmodul verbunden.

Das weitere Datenmodul enthält vorzugsweise solche Daten, die für eine Datenbearbeitung in mehreren Vorgangsbearbeitungsmodulen eingesetzt werden können.

Es ist besonders zweckmäßig, dass mehrere Vorgangsbearbeitungsmodule unabhängig voneinander Bearbeitungsvorgänge durchführen können.

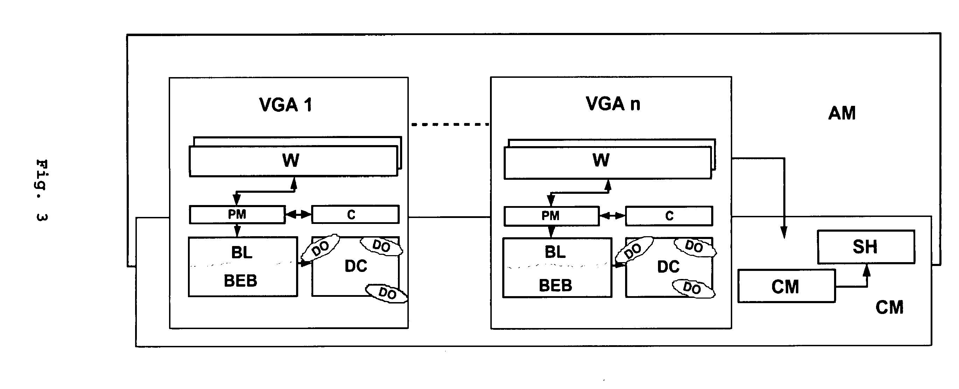

Ein Beispiel einer derartigen parallelen Bearbeitung von Vorgängen wird nachfolgend anhand von Fig. 2 und Fig. 3 erläutert.

Mehrere Vorgangsbearbeitungsmodule VGA 1 bis VGA n werden parallel betrieben.

Jedes der Vorgangsbearbeitungsmodule enthält einen eigenen Datencontainer DC. Innerhalb der Datencontainer DC befinden sich Datenobjekte.

Durch geeignete Objekte, die vorzugsweise statuslos sind, werden Daten zu den Datencontainern DC übermittelt.

Die entsprechenden Objekte, die Daten in den Datencontainer transportieren beziehungsweise speichern, sind vorzugsweise Business-Objekte mit einer Business-Logik BL oder dem Backend zugeordnete weitere Business-Objekte mit einer Backend-Business-Logik BEB.

Diese Objekte sind zweckmäßigerweise über ein Presentermodul PM mit einem Workspace W des jeweiligen Vorgangsbearbeitungsmoduls verbunden. Ferner sind die Presentermodule mit einem entsprechenden Controller C verbunden.

Zweckmäßigerweise sind wenige ausgewählte Bereiche des Vorgangsbearbeitungsmoduls, insbesondere der VGA-Workspace W mit einem Application-Manager AM verbunden.

Der Context-Manager hält Schnittstellen bereit, die eine Datenübertragung zwischen den Vorgangsbearbeitungsmodulen VGA 1 bis VGA n mit dem Backend ermöglicht. Insbesondere startet, pausiert und beendet der Context-Manager die Vorgangsbearbeitungsmodule (VGA).

### Context-Manager CM

Eine besonders bevorzugte Ausführungsform des Context-Managers CM zeichnet sich dadurch aus, dass er Schnittstellen bereit hält, die eine Datenübertragung zwischen dem Session-Manager und der Rohdatenkomponente ermöglichen können.

### Daten-Container DC

Die Daten-Container enthalten Elemente des durchzuführenden Verarbeitungsprozesses, das heißt, der Status einer VGA spiegelt sich in den konkreten Werten auf den Elementen im Daten-Container DC wider. Die Daten-Container DC ermöglichen einen Abgleich und Rückmeldung an die Business Objekte, wenn eine Änderung von Feldinhalten auf der GUI vorgenommen wird. Der Daten-Container DC kann jederzeit mit weiteren Werten belegt werden, so dass diese validiert werden können.

Eine besonders bevorzugte Ausführungsform der Erfindung sieht insbesondere vor, Eingabedaten von Anwendern (Retail Client Nutzer) in einem Daten-Container DC in Elementen abzulegen.

Die Erfindung ermöglicht vielfache Ausgestaltungen von Transaktionssystemen. Ausführungsformen mit einer dezentralisierten Datenspeicherung sind wegen einer Erhöhung der Flexibilität und der Ausfallsicherheit besonders bevorzugt.

Die erfindungsgemäße Datenablage erhöht die Flexibilität des Systems und die Fehlersicherheit des Systems.

Eine besonders bevorzugte Ausführungsform der Erfindung zeichnet sich dadurch aus, dass in dem Vorgangsbearbeitungsmodul ein Datencontainer zum Speichern des Datenobjekts erzeugt wird.

Insbesondere ist es zweckmäßig, dass die Datenobjekte den Wert der Daten enthalten.

Vorteilhaft weist das Vorgangsbearbeitungsmodul neben einer oder mehreren Komponenten zur Erfassung und/oder Bearbeitung einen Datencontainer zum Speichern der Datenobjekte auf. Der Datenbestand des Vorgangsbearbeitungsmoduls, der in Form der Datenobjekte vorliegt, kann somit in einfacher Weise gespeichert und, etwa nach einem Systemabsturz, wiederhergestellt werden.

Eine besonders umfassende Datensicherung sowie eine besonders einfache und zuverlässige Datenwiederherstellung lassen sich in einer besonders bevorzugten Ausführungsform der Erfindung dadurch erzielen, dass jedem Datenelement, das von dem Vorgangsbearbeitungsmodul erfasst und/oder verarbeitet wird, ein Datenobjekt zugeordnet wird.

Die Ausführungen für Daten gelten auch für einzelne Datenelemente. Die Verwendung der Pluralform "Daten" stellt also keine Festlegung dar, sondern schließt jeweils ausdrücklich auch den Fall ein, dass es sich um ein einzelnes Datenelement handelt.

Der Datencontainer enthält damit den gesamten "Zustand" eines Vorgangs. Der vollständige Vorgang kann somit besonders einfach gesichert und gegebenenfalls wiederhergestellt werden. Zur weiteren Erhöhung der Datensicherheit ist es zweckmäßig, dass die Datenobjekte neben den Daten zudem Eigenschaften der Daten enthalten, welche vorzugsweise Beschränkungen zugelassener Werte beschreiben. Dabei kann es sich bei Daten in einem Zahlenformat beispielsweise um Wertebereiche oder vorgegebene diskrete Zahlenwerte handeln oder es kann eine vorgegebene Minimal- und/oder Maximallänge einer Zeichenkette angegeben werden.

Das Datenbearbeitungsmodul kann damit schnell und einfach an geänderte Bedingungen angepasst werden, indem die in den Datenobjekten hinterlegten Eigenschaften angepasst werden.

Anhand der in dem Datencontainer enthaltenen Datenobjekte kann auch das Verhalten des Vorgangs vorgegeben werden. Die Konfiguration des Verhaltens ist somit weitgehend von Einstellungen in der Funktionseinheit des Vorgangsbearbeitungsmoduls entkoppelt, so dass die Funktionseinheit in hohem Maße auf Standardoperationen zurückgreifen kann, die für eine Vielzahl von Vorgängen durchgeführt werden.

Die Erfassung von Daten lässt sich innerhalb des Vorgangsbearbeitungsmoduls dadurch realisieren, dass Werte von bestehenden Datenobjekten verändert werden. Gleichfalls ist es jedoch auch möglich, neue Datenobjekte anzulegen und Werte in diese einzutragen. Zur Anzeige von Daten kann ebenfalls auf die Werte des Datencontainers zugegriffen werden.

Das Computersystem umfasst wenigstens zwei Datenquellen bzw. Datensenken. Bei einer Datenquelle handelt es sich um einen Ursprungsort, von welchem Daten geliefert werden. Bei einer Datensenke handelt es sich um einen Bestimmungsort für Daten und somit um eine Empfangsstelle. Die Übernahme von Daten erfolgt üblicherweise über eine standardisierte Schnittstelle. Bei den Datenquellen und Datensenken kann es sich beispielsweise um lokale Datenbanken, servergestützte Datenbanken, Anwendungsserver oder Umsysteme handeln. Derartige Datenquellen und Datensenken werden zur Vereinfachung im Folgenden allgemein als Datensysteme bezeichnet. Die Datensysteme können sowohl im Frontend als auch im Backend angeordnet sein. In dem in Fig. 1 dargestellten Ausführungsbeispiel ist ein erstes Datensystem dem Backend BE zuzuordnen, während zwei weitere Datensysteme dem Frontend FE zuzuordnen sind.

### Datenkomponente DK

Die Datenkomponente betrifft Datensätze, die mit einer Konfigurationsdatei verbunden sind. Die Konfigurationsdatei ermöglicht einen zentralen Zugriff auf lokal gespeicherte Daten.

In einer besonders bevorzugten Ausführungsform besteht die Datenkomponente aus einer Business-Schicht, einer technischen Verwaltungsschicht und einer technischen Adapterschicht. Die Datenkomponente steuert die Zugriffe auf lokale und im Backend angesiedelte Datenquellen. Hierzu besteht eine Schnittstelle zu KISS.

Mit Hilfe einer Rohdatenkomponente erzeugt die Vorgangsart Rohdatensätze. Der Context-Manager dient als Mittler, er gibt die Dienste der Rohdatenkomponente über die Schnittstelle IRDSManager an die Vorgangsart weiter.

Die Datenkomponente stellt vorzugsweise eine Komponente eines Frameworks dar, welche von anderen Komponenten genutzt werden kann. Beispielsweise kann die Datenkomponente von der Rohdatenkomponente genutzt werden, welche die erste Erfassung von Datenmaterial in Form einer Urliste (raw data) verarbeitet.

Ferner ist es zweckmäßig, dass das Transaktionssystem ein Steuerungsmodul enthält, das so ausgestaltet ist, dass es den Daten-Container aktivieren und/oder deaktivieren kann.

Die erfindungsgemäße Datenkomponente DK umfasst zweckmäßigerweise wenigstens eine Funktionskomponente FK, eine Zugriffskomponente ZK und eine Adapterkomponente AK.

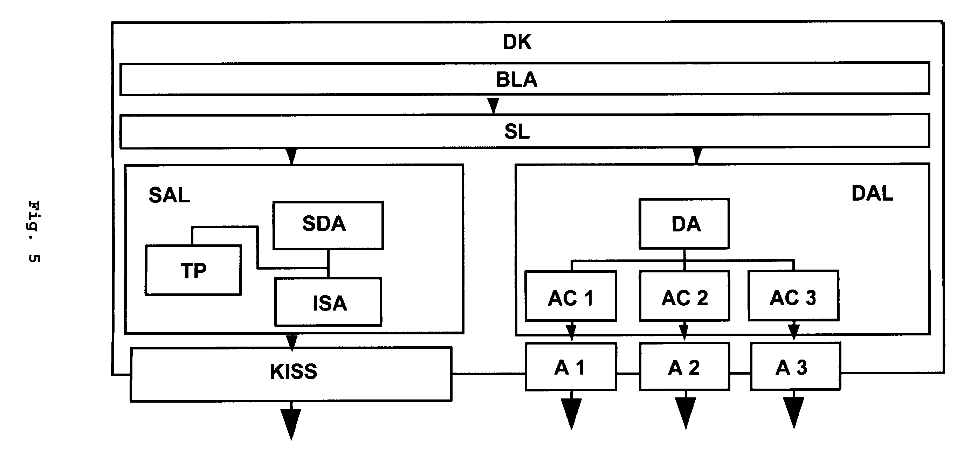

Eine besonders bevorzugte Ausführungsform der Datenkomponente DK wird nachfolgend anhand von Fig. 5 näher erläutert.

Die bevorzugte Datenkomponente weist drei Schichtebenen auf. Die oberste Schichtebene ist als Business-Schicht (BLA) ausgebildet. Hierunter befindet sich eine technische Verwaltungsschicht (Data Service Layer-SL).

Die Datenkomponente enthält vorzugsweise ferner eine Schnittstelle zu der Benachrichtigungskomponente KISS, so dass Daten mit anderen Komponenten des Transaktionsbearbeitungssystems ausgetauscht werden können.

Ferner ist es vorteilhaft, dass die Datenkomponente DK Adapter A1, A2, A3 enthält, die Daten so aufbereiten, dass sie in anderen Komponenten besser verarbeitet werden können. Beispiele für derartige Adapter sind Schnittstellen zu Datenbanken, beispielsweise SQL-Schnittstellen.

Es ist besonders vorteilhaft, dass die Datenübermittlung an die Datenobjekte über ein Datenbearbeitungsmodul DA erfolgt. Das Datenbearbeitungsmodul DA übergibt die Daten als Datenübertragungsaktionen AC1, AC2 und AC3 an die Adapter A1, A2 und A3.

Ferner ist es vorteilhaft, dass die Datenkomponente DK einen Server Access Layer SAL enthält.

Zweckmäßigerweise enthält der Server Access Layer SAL einen Template-Prozessor TP, der mit einem Datenaktionsobjekt SDA und einem internen Service-Adapter ISA zusammenwirkt.

Mit Hilfe der Datenkomponente wird das Verfahren wie folgt durchgeführt:
In einer Filiale eines Filialsystems ist jeder einzelnen in der Filiale angebotenen Dienstleistung ein Geschäftsvorgang zugeordnet, für den eine programmtechnische Entsprechung in dem IT-System vorgesehen ist.

Der Mitarbeiter in der Filiale nimmt die Kundenwünsche entgegen und erfasst Kundendaten, Kundenwünsche und so weiter, beispielsweise mit Hilfe einer grafischen Benutzungsoberfläche, die den Mitarbeiter bei der vollständigen Eingabe aller erforderlichen Angaben unterstützt. Der Arbeitsplatz, an dem der Mitarbeiter diese Tätigkeiten ausführt, wird häufig auch als Frontend bezeichnet.

Die auf diese Weise erfassten Kundenwünsche und Kundendaten werden zu einer tiefer liegenden Komponente, beispielsweise einer Infrastrukturschicht des Datenverarbeitungssystems, weitergegeben. Die Infrastrukturschicht kümmert sich eigenständig um die Steuerung von peripheren Komponenten, ohne dass der Mitarbeiter in die Abläufe eingreifen müsste. Zum Beispiel werden Druckaufträge automatisch an einen Fahrschein- oder Belegdrucker weitergeleitet oder eine automatische Kasse wird zur Ausgabe eines bestimmten Geldbetrages veranlasst.

Alle diese Vorgänge werden in einem Hintergrundsystem (Backend) protokolliert und Kundendaten werden gespeichert. Darüber hinaus werden in dem Hintergrundsystem, das auch als Filial-Backend bezeichnet wird, Daten gespiegelt und archiviert, um die Grundsätze ordentlicher Buchführung zu verwirklichen. Das Frontend, die Infrastrukturschicht und das Filial-Backend bilden wichtige Bestandteile des Filialsystems.

Schließlich ist es für einige Geschäftsvorgänge erforderlich, dass das Filialsystem Daten mit anderen Systemen austauscht, zum Beispiel mit der Datenbank eines Bankrechners, um festzustellen, ob die von einem Kunden gewünschte Barauszahlung auf seinem Konto überhaupt gedeckt ist. Solche Systeme außerhalb einer Filiale sind Beispiele für Umsysteme. Die Übertragung einer solchen Abfrage wird ebenfalls von dem Filial-Backend ohne Eingriffe des Mitarbeiters selbsttätig ausgeführt.

Werden Daten von den Umsystemen zurück übertragen, werden sie von dem Filial-Backend, der Infrastrukturschicht bis zum Frontend des Mitarbeiters übertragen, damit dieser dem Inhalt der Daten entsprechend aktiv wird. In dem vorliegenden Beispiel würde er also den gewünschten Geldbetrag auszahlen, falls hierfür die entsprechenden Berechtigungsdaten vorliegen.

Der Datenaustausch zwischen den einzelnen Schichten des Filialsystems und den Umsystemen sind in Figur 2 durch Pfeile angedeutet.

### KISS

### Benachrichtigungskomponente KISS (Komponenten-Infrastruktur-Service)

Die Benachrichtigungskomponente ermöglicht eine Auswahl von Übertragungswegen zum Übermitteln von Benachrichtigungen.

Zweckmäßigerweise wird die Benachrichtigungskomponente so ausgestaltet, dass sie ein Auswahlmittel zur Auswahl eines Übertragungskanals mit einer für den jeweiligen Übertragungszweck geeigneten Datenrate und/oder sonstigen übertragungsrelevanten Eigenschaften wie beispielsweise der erzielbaren Datensicherheit enthält.

Eine zweckmäßige Weiterbildung der Benachrichtigungskomponente KISS beinhaltet das "Mitnehmen" von Daten niedrigerer Priorität bei einem für eine Übertragung von Daten höherer Priorität bereits geöffneten Übertragungskanal.

Zweckmäßigerweise erfolgt die Zuweisung des Übertragungskanals anhand von Informationen über die zu übermittelnden Daten.

Es ist besonders zweckmäßig, dass die beiden Übertragungskanäle sich in wenigstens einem Merkmal voneinander unterscheiden.

Beispielsweise ist einer der Übertragungskanäle schneller als wenigstens einer der anderen Übertragungskanäle, beispielsweise durch Vorsehen einer schnellen Online-Verbindung mit entsprechend schnellen technischen Übertragungsmitteln, vorzugsweise zu einer Online-Datenübertragung, zum Beispiel ein DSL-Kanal, ein Glasfasernetzwerk, ein WLAN-Netz, eine GPRS-Verbindung oder eine UMTS-Verbindung.

Andere Kriterien, durch die sich wenigstens einer der Übertragungskanäle auszeichnet, können beispielsweise die Menge der übertragbaren Daten oder die eingesetzte Art der Benachrichtigung sein.

Ein besonderer Vorteil der dargestellten Benachrichtigungskomponente KISS ist, dass andere Komponenten der Zielarchitektur die Funktionalität von KISS unabhängig von der internen Funktionsweise von KISS nutzen können.

Eine besonders bevorzugte Ausführungsform des Transaktionssystems zeichnet sich dadurch aus, dass wenigstens ein Teil der Vorgangsbearbeitungsmodule und wenigstens eine der Dienstkomponenten durch die Benachrichtigungskomponente über wenigstens zwei Übertragungskanäle verbindbar sind, dass die Benachrichtigungskomponente ein Mittel zur Zuweisung eines der Übertragungskanäle aufweist und dass das Mittel zur Zuweisung des Übertragungskanals so ausgestaltet ist, dass es die Zuweisung anhand von Informationen über die zu übermittelnden Daten vornehmen kann.

Eine besonders bevorzugte Ausführungsform der Benachrichtigungskomponente zeichnet sich dadurch aus, dass es mehrere (beispielsweise drei) Möglichkeiten gibt, Daten zu versenden (Remote; Offline-Weg; Online-Anfrage) und dass KISS eine Optimierung des Übertragungsweges vornimmt. Hierdurch werden erhebliche Übertragungskosten gespart. Dies geschieht auch dadurch, dass bei der Online-Anfrage auch für den Offline-Weg bestimmte Daten "mitgenommen" werden.

Dies erfolgt zweckmäßigerweise dadurch, dass bei einer Übertragung von Daten überprüft wird, ob der zugewiesene Übertragungskanal so beschaffen ist, dass er eine Mitübermittlung von weiteren Daten als den ursprünglich zugewiesenen Daten ermöglicht.

Dies hat den Vorteil, dass ein Mitnehmen von Daten erfolgt, die eigentlich nicht für eine Übertragung vorgesehen sind, wobei das Mitnehmen jedoch den für die Übertragung der anderen Daten bereits geöffneten Übertragungskanal mitnutzt, soweit der Übertragungskanal und/oder seine Übertragungsparameter (Übertragungskapazität, Datenvolumen) ein derartiges Mitübertragen zulässt.

Hierbei ist es besonders vorteilhaft, dass bei einer Übertragung von Daten mit einer hohen Priorität für die Datenübertragung überprüft wird, ob Daten vorhanden sind, die eine niedrigere Priorität aufweisen, ebenfalls über den für die Übertragung der Daten hoher Priorität zugewiesenen Übertragungskanal übertragen werden können.

Es ist besonders zweckmäßig, dass Übertragungskanäle sich in wenigstens einem Merkmal voneinander unterscheiden. Beispielsweise ist einer der Übertragungskanäle schneller als wenigstens einer der anderen Übertragungskanäle, beispielsweise durch Vorsehen einer schnellen Online-Verbindung mit entsprechend schnellen technischen Übertragungsmitteln, vorzugsweise zu einer Online-Datenübertragung, zum Beispiel ein DSL-Kanal, ein Glasfasernetzwerk, ein WLAN-Netz, eine GPRS-Verbindung oder eine UMTS-Verbindung.

Diese Ausführungsform der Erfindung hat den Vorteil, dass unterschiedliche Daten auf verschiedene Weise verarbeitet und/oder übertragen werden können.

Ein weiterer Vorteil der eingesetzten Benachrichtigungskomponente ist, dass eine flexible Anpassung an unterschiedliche Eigenschaften der Daten ermöglicht wird.

Insbesondere ist es hierdurch auch möglich, das Verfahren besonders flexibel durchzuführen, beziehungsweise die Benachrichtigungskomponente und/oder das Datenübertragungssystem anpassbar auszugestalten.

Insbesondere ist es möglich, durch Veränderungen von Eigenschaften des Mittels zur Zuweisung des Übertragungskanals Übertragungsparameter für Vorgänge des Datenübertragungssystems Datenübertragungen für eine Vielzahl von Endgeräten (beispielsweise in mehreren Endgeräten und/oder in mehreren Filialen (teilweise mehrere tausend oder zehntausend) durch Änderung an einem einzelnen Mittel oder wenigen ausgewählten Mitteln zur Zuweisung des Übertragungskanals zu verändern.

Eine zweckmäßige Ausführungsform des Datenübertragungssystems, der Benachrichtigungskomponente und des Verfahrens zum Übertragen von Daten zeichnet sich dadurch aus, dass das Mittel zum Verbinden der Daten mit den Informationen über die Anforderungen für den zuzuweisenden Übertragungskanal die Informationen über die Auswahlkriterien in eine mit den Daten verbindbare Konfigurationsdatei einbringt.

Hierdurch ist es möglich, schnell und vereinheitlichbar auf die Anforderungen an die Datenübertragung zuzugreifen und eine Datenübertragung entsprechend dieser Anforderungen vorzunehmen beziehungsweise eine Entscheidung über eine gezielte Übertragung der Daten zu einem späteren Zeitpunkt oder über einen anderen Übertragungskanal vorzunehmen.

Eine besonders bevorzugte Ausführungsform des Datenübertragungssystems, der Benachrichtigungskomponente und des Verfahrens zum Übertragen von Daten zeichnet sich dadurch aus, dass das Mittel zum Verbinden der Daten mit den Informationen über die Auswahlkriterien für den zuzuweisenden Übertragungskanal die Daten in einen virtuellen Briefumschlag einbringt und diesen mit den Informationen über die Auswahlkriterien für den zuzuweisenden Übertragungskanal verbindet.

Ein derartiger virtueller Briefumschlag ist mit dem Vorteil verbunden, dass Dateninhalte von äußeren Anforderungen an die Datenübertragung leicht entkoppelt werden können. Außerdem ist hierdurch eine weitere Erhöhung der Datensicherheit erzielbar.

Eine zweckmäßige Ausführungsform des Datenübertragungssystems, der Benachrichtigungskomponente und des Verfahrens zum Übertragen von Daten zeichnet sich dadurch aus, dass die Benachrichtigungskomponente ein Mittel zum Erfassen von Informationen über Auswahlkriterien für einen zuzuweisenden Übertragungskanal enthält, dass die Benachrichtigungskomponente so beschaffen ist, dass sie eine Datenübertragung durch Übertragungskanäle vornehmen kann, und dass die Benachrichtigungskomponente anhand der Informationen über die Auswahlkriterien für einen zuzuweisenden Übertragungskanal den Übertragungskanal zuweist.

Eine besonders bevorzugte Ausführungsform des Datenübertragungssystems, der Benachrichtigungskomponente und des Verfahrens zum Übertragen von Daten zeichnet sich dadurch aus, dass anhand von Eigenschaften der Daten eine Zuweisung eines Übertragungskanals für die Übermittlung der Daten erfolgt.

Erfindungsgemäß wird eine Differenzierung zwischen verschiedenen Datenkategorien vorgenommen.

Die vorgenommene Differenzierung zwischen verschiedenen Datenkategorien ermöglicht eine Vergrößerung der Einsatzmöglichkeiten der Daten, zum Beispiel bei komplizierten Datenbanksystemen oder Systemen mit einer Vielzahl von vernetzten Endgeräten, beispielsweise Fahrkarten- oder Bankautomaten.

KISS ermöglicht die Verknüpfung des Filial-Frontends mit dem Filial-Backend und ist im Filial-Backend für die Kommunikation der Services untereinander zuständig. KISS lagert zum einen im Filial-Frontend und ist dort mit der Carbon-Datenkomponente durch eine Schnittstelle verbunden. Das Filial-Backend verfügt über einen KISS Gegenpart. Die KISS-interne Datenübertragung basiert dabei vorzugsweise auf XML und/oder SOAP. Eine Verknüpfung von Rechnern kann grundsätzlich über einen langsamen Nachrichtenweg oder eine schnelle Verbindung hergestellt werden. Die Besonderheit von KISS besteht darin, eine Symbiose erreicht zu haben. KISS ist in der Lage, ankommende Daten zu sortieren, d.h. den Daten den einen oder einen anderen Weg zuzuweisen. Für den langsamen Nachrichtenweg setzt KISS beispielsweise die Kommunikationsmiddleware Riposte ein, während die schnellere Verbindung über das Remote-Übertragungssystem hergestellt wird.

Die Erfindung eignet sich insbesondere für einen Einsatz der Übertragung unterschiedlicher Datensätze. Eine besonders bevorzugte Ausführungsform ist eine Datenkomponente.

Die Datenkomponente betrifft Datensätze, die mit einer Konfigurationsdatei verbunden sind. Die Konfigurationsdatei ermöglicht einen zentralen Zugriff auf lokal gespeicherte Daten.

In einer besonders bevorzugten Ausführungsform besteht die Datenkomponente aus einer Business-Schicht, einer technischen Verwaltungsschicht und einer technischen Adapterschicht. Die Datenkomponente steuert die Zugriffe auf lokale und im Backend angesiedelte Datenquellen. Hierzu besteht eine Schnittstelle zu KISS.

### Komponenten

Eine Komponente ist eine Sammlung von Funktionalitäten, die vorzugsweise als separate programmtechnische Einheit gefasst ist. Komponenten können durch den Carbon-Kern, Vorgangsarten und durch andere Komponenten verwendet werden, um bestimmte Aufgaben (Beispiel: Verwalten von Kundendaten) durchzuführen. Ziel bei der Verwendung von Komponenten ist es, die redundante Entwicklung von Funktionalitäten zu vermeiden, in dem mehrere Vorgangsarten auf die gleiche Komponente zugreifen können.

Komponenten sind vorzugsweise keine eigenständigen Programme und benötigen zu ihrer Ausführung die Infrastruktur eines Clients. Vorzugsweise enthält eine Komponente keine Elemente, die der Benutzeroberfläche zugeordnet werden. Komponenten stehen vorzugsweise nicht im direkten Dialog mit dem Anwender, sondern werden über Vorgangsarten oder andere Komponenten aufgerufen.

Vorzugsweise ist die Carbon-Komponente eine Deployment-Einheit, die Funktionalitäten und eine Factory enthält. Die Carbon-Komponente ist unabhängig zu sehen von sonstigen Komponenten. Die Factory liefert Informationen über die Carbon-Komponente und ermöglicht es so, eine Konsistenz- und Vorbedingungsprüfung durchzuführen und liefert damit Objektinstanzen eines angeforderten Typs.

Durch diesen Aufbau ist es möglich, auf einheitlichem Wege Objektinstanzen zu erstellen. Da in der Regel ein Interface von der Factory angefordert wird, kann die Klasse, die von der einen Instanz generiert wird, problemlos geändert oder ausgetauscht werden.

Die Factory ermöglicht es, die Bedingungen zu überprüfen, die zur Benutzung der Komponente erfüllt sein müssen, ohne dafür Instanzen der Klassen der Komponente erzeugen zu müssen. Hierfür sind Methoden zur Konsistenz- bzw. zur Vorbedingungsprüfung zu implementieren.

Die Eigenschaft Version liefert die Version der Komponente. Die Eigenschaft Domain liefert die Domain der Komponente. Mit der Methode CheckConsistency wird eine Konsistenzprüfung durchgeführt und mit der Methode CheckPrerequisites wird eine Vorbedingungsprüfung durchgeführt. Objektinstanzen werden je nach übergebener Type von der Methode GetInstance erzeugt. Die Klasse, die die Schnittstelle ICmpFactory implementiert, wird mit Hilfe des CmpFactoryAttribute im Assembly angegeben. Über dieses Attribut kann per Reflection eine Instanz der Schnittstelle ICmpFactory bezogen werden. Es existiert eine abstrakte Klasse StandardCmpFactory, die das Interface ICmpFactory implementiert. Ein vereinfachter Zugriff auf Objektinstanzen einer Komponente ist mit Hilfe der Klasse CmpSupport möglich.

### Konfigurationsdatei

Erfindungsgemäß ist eine Konfigurationsdatei in die Funktionskomponente einlesbar, wobei die Konfigurationsdatei fachliche Informationen für die Zugriffe auf die Datensysteme enthält. Die Konfigurationsdatei liegt vorzugsweise im XML-Format vor und initiiert eine Klasse DataService zur Kapselung aller Datenzugriffe. Die Funktionskomponente bildet die fachlichen Inhalte der Vorgangsbearbeitungsmodule ab, wobei beispielsweise in der Konfigurationsdatei hinterlegt ist, in welcher Datenquelle vom Vorgangsbearbeitungsmodul benötigte Daten gespeichert sind oder in welcher Datensenke durch das Vorgangsbearbeitungsmodul erfasste Daten hinterlegt werden. Ferner erfolgt die Validierung von Eingabe- und Ausgabewerten durch die Funktionskomponente. Auch die Zusammenführung von Daten aus mehreren Datensystemen wird durch die Funktionskomponente durchgeführt. Technische Details für den Zugriff auf die Datensysteme sind in der Funktionskomponente vorzugsweise nicht enthalten.

### Middleware

Bei der Middleware handelt es sich um eine anwendungsunabhängige Komponente, welche Dienstleistungen zur Vermittlung zwischen Anwendungen anbietet. Eine Middleware stellt eine Ebene in einem komplexen Software-System dar, die als Dienstleister anderen ansonsten entkoppelten Softwarekomponenten die Kommunikation untereinander ermöglicht.

### Model View Controller

Der Model View Controller sorgt für die Trennung von Benutzeroberfläche, Daten und Prozessen.

### Peripherie-Komponente PK

Über die Peripherie-Komponente steuert Carbon die Peripherie direkt an. Eine eigens programmierte Schnittstelle ermöglicht den Anschluss eines jeden Gerätes, das die von Carbon vorgegebenen Eigenschaften enthält.

### Recovery-Manager RM

Der Recovery-Manager speichert den Stand des Clients in regelmäßigen Abständen.

### Rohdatenkomponente

Mit Hilfe der Rohdatenkomponente erzeugt die Vorgangsart Rohdatensätze. Der Context-Manager dient als Mittler, er gibt die Dienste der Rohdatenkomponente über die Schnittstelle IRDSManager an die Vorgangsart weiter.

### Session-Manager SM

Der Session-Manager SM beinhaltet zweckmäßigerweise ein Modul zur Verwaltung von Rohdatensätzen. Vorzugsweise hängen die Rohdatensätze zusammen. Der Einsatz des Session-Managers SM dient vorteilhafterweise dazu, eine Einbeziehung weiterer Daten, insbesondere der Rohdaten, zu ermöglichen.

### Zugriffskomponente

Die Zugriffskomponente der Datenkomponente enthält die technischen Informationen zu Aktionen auf den Datensystemen und stellt eine technische Verwaltungsschicht dar. Sie enthält die Logik zur Erzeugung und Parametrisierung von technischen Zugriffen auf die Datensysteme, jedoch vorzugsweise keine fachliche Logik. Der Zugriff auf die Datensysteme erfolgt zweckmäßigerweise über Schnittstellen in Form von Datenaktionen und über technische Adapterklassen.

Die Zugriffskomponente wird vorzugsweise als abstrakte Klasse DataService ausgeführt. Sie fungiert als Factory für alle Datenaktionen. Eine Datenaktion wird durch eine Klasse implementiert, die ein IDataAction-Interface implementiert. Jede als Datenaktion fungierende Klasse muss das IDataAction-Interface implementieren. Über dieses IDataAction-Interface werden alle lokalen und servergestützten Datenzugriffe durchgeführt. Das IDataAction-Interface realisiert vorzugsweise alle allgemeinen Datenoperationen wie Lesen, Schreiben und Manipulieren. Vorzugsweise ist eine erste IDataAction für Serverzugriffe und eine zweite IDataAction für Datenbankzugriffe vorgesehen.

### Bezugszeichenliste:

- A1: Adapter
- A2: Adapter
- A3: Adapter
- AC1: Datenübertragungsaktion
- AC2: Datenübertragungsaktion
- AC2: Datenübertragungsaktion
- AM: Application-Manager
- AP: Arbeitsplatz
- API: Application Programming Interface
- B: Benutzer
- BD: Basisdienst
- BEB: Backend-Business-Logik
- BM: Berechtigungsmodul
- BL: Business-Logik
- BLA: Business-Schicht
- BP: Berechtigungs-Plugin
- C: Controller
- CF: Carbon-Framework
- CH: Carbon-Host
- CI: Schnittstellenmodul
- CM: Context-Manager
- DA: Datenbearbeitungsmodul
- DC: Datencontainer
- DK: Daten-Komponente
- DKM: Datenkomponentenmodul
- DR: Druckkomponente
- FT: Filialtyp
- ISA: Service-Adapter
- KISS: Benachrichtigungskomponente
- NKM: Kassenmodul
- PK: Peripheriekomponente
- PM: Präsentermodul
- RDM: Rohdatenmodul
- RKM: Rohdatenkomponentenmodul
- RM: Recovery-Manager
- SAL: Server Access Layer
- SDA: Datenaktionsobjekt
- SL: Data Service Layer
- SM: Session-Manager
- TP: Template-Prozessor
- VGA: Vorgangsbearbeitungsmodul
- W: Workspace

## Patentansprüche

1. Transaktionssystem zum Verarbeiten von Transaktionsinformationen,
**dadurch gekennzeichnet,**
**dass** das Transaktionssystem Vorgangsbearbeitungsmodule (VGA) enthält, wobei die Vorgangsbearbeitungsmodule (VGA) mit einem Context-Manager (CM) verbindbar sind, wobei der Context-Manager so ausgebildet ist, dass er mit mindestens einem Vorgangsbearbeitungsmodul (VGA) und mit mehreren Dienstkomponenten (DR, PK, DK, NKM, BD) verbunden ist.

2. Transaktionssystem nach Anspruch 1,
**dadurch gekennzeichnet,**
**dass** der Context-Manager sowohl als zentrales Steuerungsmittel für die Vorgangsbearbeitungsmodule (VGA) als auch als zentraler Dienstanbieter für die Vorgangsbearbeitungsmodule (VGA) ausgebildet ist.

3. Transaktionssystem nach Anspruch 2,
**dadurch gekennzeichnet,**
**dass** der Context-Manager mit einer Schnittstelle ISupportService (ISS) verbunden ist, wobei die Schnittstelle so ausgebildet ist, dass sie eine Abfrage des Vorhandenseins von angebundenen Dienstkomponenten ermöglicht.

4. Transaktionssystem nach einem oder mehreren der Ansprüche 1 bis 3,
**dadurch gekennzeichnet,**
**dass** das Transaktionssystem eine Benachrichtigungskomponente (KISS) aufweist, wobei die Benachrichtigungskomponente (KISS) ein Übermitteln von Daten ermöglicht.

5. Transaktionssystem nach Anspruch 4,
**dadurch gekennzeichnet,**
**dass** die Benachrichtigungskomponente ein Auswahlmodul zur Auswahl von Übertragungswegen zum Übermitteln der Benachrichtigungen enthält.

6. Transaktionssystem nach einem oder mehreren der vorangegangenen Ansprüche,
**dadurch gekennzeichnet,**
**dass** es einen Session-Manager enthält, wobei der Session-Manager ein Modul zur Verwaltung zusammenhängender Rohdatensätze enthält.

7. Transaktionssystem nach Anspruch 6,
**dadurch gekennzeichnet,**
**dass** der Session-Manager mit einer Rohdatenkomponente verbunden ist.

8. Transaktionssystem nach Anspruch 7,
**dadurch gekennzeichnet,**
**dass** der Context-Manager Schnittstellen bereithält, die eine Datenübertragung zwischen dem Session-Manager und der Rohdatenkomponente ermöglichen können.

9. Transaktionssystem nach einem oder mehreren der vorangegangenen Ansprüche,
**dadurch gekennzeichnet,**
**dass** wenigstens ein Teil der Vorgangsbearbeitungsmodule und wenigstens eine der Dienstkomponenten durch eine Benachrichtigungskomponente über wenigstens zwei Übertragungskanäle verbindbar sind, dass die Benachrichtigungskomponente ein Mittel zur Zuweisung eines der Übertragungskanäle aufweist und dass das Mittel zur Zuweisung des Übertragungskanals so ausgestaltet ist, dass es die Zuweisung anhand von Informationen über die zu übermittelnden Daten vornehmen kann.

10. Verfahren zum Verarbeiten von Transaktionsinformationen,
**dadurch gekennzeichnet,**
**dass** verschiedene Transaktionsinformationen in parallel betriebenen Vorgangsbearbeitungsmodulen (VGA 1; ...; VGA n) verarbeitet werden und dass über einen Context-Manager (CM) ein Datenaustausch mit wenigstens einer Dienstkomponente (DR, PK, DK, NKM, BD) erfolgt.
